# EUROPÄISCHE PATENTSCHRIFT

(11) **EP 1 956 814 B1**
(45) Veröffentlichungstag und Bekanntmachung des Hinweises auf die Patenterteilung: **20.03.2013**
(21) Anmeldenummer: 08101082.9
(22) Anmeldetag: 30.01.2008
(51) Int. Cl.: H04M 3/38, H04L 29/06

(54) **Digitales Verfahren und Anordnung zur Authentifizierung eines Nutzers eines Telekommunikations- bzw. Datennetzes**
Digital method and device for authenticating a user of a telecommunications / data network
Procédé numérique et agencement d'authentification d'un utilisateur d'un réseau de télécommunication ou de données

(30) Priorität: 12.02.2007 DE 102007006847
(43) Veröffentlichungstag der Anmeldung: 13.08.2008
(73) Patentinhaber: VoiceCash IP GmbH, 8002 Zürich (CH)
(72) Erfinder: Kuppuswamy, Raja, 80799, München (DE); Mumm, Marc, 80686, München (DE)
(74) Vertreter: Meissner, Bolte & Partner

(56) Entgegenhaltungen:
- EP-A- 1 577 733
- US-A1- 2003 046 083
- US-A1- 2003 163 739

## Beschreibung

Die Erfindung betrifft ein digitales Verfahren zur Authentifizierung eines Nutzers eines Telekommunikations- bzw. Datennetzes sowie eine Anordnung zur Durchführung dieses Verfahrens.

Seit TK- und Daten-Endgeräte in Form von Mobiltelefonen und tragbaren Computern mit Mobilfunk oder WLAN-Schnittstelle mobil betreibbar sind, ist eine Authentifizierung des jeweiligen tatsächlichen Nutzers für viele Einsatzzwecke und unter verschiedenen Gesichtspunkten von noch größerer Bedeutung als früher. Besonders virulent ist dies im Zusammenhang mit dem Zugriff auf finanzielle Ressourcen eines tatsächlichen oder potentiellen Nutzers, aber auch im Hinblick auf den Zugriff zu nicht frei verfügbaren Leistungen oder geschützten Datenbeständen.

Während diese Problemstellung bei PCs etwa mit der Entwicklung des elektronischen Homebanking und mit der Entstehung von Internet-Handelsplattformen bereits vor Jahren zu umfangreichen Entwicklungsanstfengungen und auch durchaus marktfähigen und marktgängigen Lösungen geführt hat, hat sich für Mobilfunk-Endgeräte - abgesehen vom alltäglichen Einsatz einer PIN zum Einloggen - bisher keine der entwickelten Lösungen durchsetzen können. So gibt es für den massenhaft als Routine-Vorgang ablaufenden Vorgang des Aufladens einer Prepaid-Karte eines Mobiltelefons verschiedene konkurrierende Modalitäten, die alle praktikabel sind, jedoch jeweils gewisse Nachteile aufweisen.

Die "klassische" Variante besteht darin, dass der Prepaid-Nutzer bei seinem Provider oder einem autorisierten Händler ein Voucher mit einem vorgegebenen Wert käuflich (gegen Barzahlung, EC-Karten-Abbuchung oder auch per Kreditkarte) erwirbt. Auf dem Voucher ist eine verborgene Codenummer angegeben, die frei zu rubbeln ist und die der Nutzer telefonisch an ein Call-Center des Providers oder ein Voice-Portal durchgibt. Dort wird dann das Prepaid-Konto des Nutzers mit dem gezahlten Betrag aufgeladen.

In letzter Zeit haben sich auch verschiedene bank-gestützte Prepaid-Aufladeverfahren etabliert, etwa per Online-Überweisung des Aufladungs-Betrages oder durch direkte "Aufladung" an einem Geldautomaten mittels seiner Kundenkarte bzw. EC-Karte. Aufladevorgänge über das Internet sind unter Nutzung eines Kreditkartenkontos oder herkömmlichen Bankkontos direkt über die Homepage des Netzbetreibers, Providers oder autorisierten Händlers möglich. Auch hierbei haben sich Verfahren etabliert, bei denen ein Voucher-Code an den Kunden übermittelt wird, der zur Erhöhung der Sicherheit der Transaktion dient.

Unter Nutzung des Mobiltelefons sind Verfahren bekannt, die per Eingabe der Kreditkartennummer oder einer vordefinierten PIN über die Tastatur des Mobiltelefons funktionieren. Ersteres ist relativ umständlich, und dem letzteren Verfahren haften die bekannten Nachteile von PIN-gestützten Authentifizierungsprozeduren an, nämlich die begrenzte Sicherheit infolge unbeabsichtigter Weitergabe der PIN oder des Verlierens einer notierten PIN und die Unbequemlichkeiten beim Vergessen bzw. Verlust der PIN. Neben den PIN-gesicherten Verfahren sind inzwischen auch Auflade-Verfahren im praktischen Einsatz, die einem Anrufer - jedenfalls zum Zwecke der Karten-Aufladung mit einem relativ kleinen Geldbetrag - einen ungeschützten Zugriff auf gespeicherte Bank- bzw. Kreditkarten-Konten erlauben.

Neben den bereits erwähnten Nachteilen sind einige der bekannten und etablierten Verfahren auch für den Anbieter relativ organisations- und damit kostenaufwendig und auf Konsumenten-Seite wegen der erforderlichen Nutzung eines weiteren Mediums (neben seinem Mobiltelefon) nur eingeschränkt zu akzeptieren.

Für den Zugriffs-Schutz von Datenbeständen oder Leistungen, die über ein Mobiltelefon oder einen mobilen PC angefordert werden können, die aber einem begrenzten Nutzerkreis vorbehalten sind, sind ebenfalls verschiedene Verfahren bekannt, die für den Nutzer relativ umständlich sind und/oder begrenzte Sicherheit bieten.

Verfahren mit den Merkmalen des Oberbegriffs von Anspruch 1 bzw. Anordnungen mit den Merkmalen des Oberbegriffs von Anspruch 13 sind aus US 2003/046083 A1 oder US 2003/163739 A1 oder EP-A-1 577733 grundsätzlich bekannt.

Der Erfindung liegt die Aufgabe zugrunde, ein verbessertes Verfahren und eine verbesserte Anordnung der erläuterten Art bereitzustellen, die sich insbesondere durch eine Verbindung zwischen Nutzerfreundlichkeit (und hierdurch geförderter Nutzerakzeptanz) und angemessenem Sicherheitsstandard auszeichnen.

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 13 gelöst. Zweckmäßige Fortbildungen des Erfindungsgedankens sind Gegenstand der jeweiligen abhängigen Ansprüche.

Die Erfindung geht von dem grundsätzlichen Gedanken aus, zur Lösung des oben erläuterten Problems anstelle der bisher üblichen grundlegenden Authentifizierungsmittel Besitz und Wissen als unmittelbares Nutzer-Merkmal das für die Telekommunikation besonders geeignete biometrische Merkmal der Stimm-Eigenart bzw. des Stimmprofils zu nutzen. In einer Variante der Erfindung ist vorgesehen, dieses spezielle biometrische Merkmal auch in Kombination mit einer wissensbasierten Authentifizierung unter Nutzung eines Pass- bzw. Codewortes o.ä. einzusetzen. Zur Erfindung gehört weiterhin der Gedanke, dass eine vom Nutzer im Rahmen seines Zugriffs-Versuches gelieferte Sprachprobe einer Stimmanalyseeinrichtung zugeführt und in dieser ein aktuelles Stimmprofil zu bestimmen versucht wird.

Sofern dies aufgrund der Qualität der eingesprochenen Sprachprobe mit hinreichender Verlässlichkeit gelingt, dient die Sprachprobe der Authentifizierung des Nutzers, und bei positivem Ergebnis der Authentifizierung wird der versuchte Zugriff gewährt. Für den Fall, dass die Authentifizierung aufgrund der gelieferten Sprachprobe (wegen unzureichender Qualität oder bei nicht ausreichender Verlässlichkeit der Stimmprofil-Auswertung) nicht gelingt, sind im Rahmen des vorgeschlagenen Verfahrens mehrere Optionen möglich, wobei die Auswahl vor allem vom zu gewährleistenden Sicherheitsniveau, ggf. aber auch von weiteren Randbedingungen, wie etwa definierten Bedingungen der Benutzerführung, abhängt. Insbesondere wird in diesem Falle eine Ersatz-Authentifizierungsprozedur gestartet, die sich eines anderen Authentifizierungsmittels bedient, etwa eines Passwortes, einer PIN o.ä.

Ein wichtiger Anwendungsfall ist derjenige, bei dem als TK-Endgerät ein Prepaid-Mobilfunkendgerät genutzt wird und der Zugriff gespeicherte Transaktionsdaten für einen Bezahlvorgang zur Auffüllung eines Prepaid-Guthabens betrifft. Hierbei ist insbesondere vorgesehen, dass durch Freigabe des Zugriffs zugleich ein Zahlungsvorgang und eine Karten-Aufladung aufgrund der gespeicherten Transaktionsdaten ausgelöst wird. Auch über den Vorgang der Aufladung einer Prepaid-Karte hinaus kann vorgesehen sein, dass der Zugriff transaktionsrelevante Daten eines Bank- oder Kreditkartenkontos oder sonstigen Guthabens betrifft.

Alternativ zur Freigabe eines Zugriffes auf vorgespeicherte Transaktionsdaten kann, sowohl bei der Prepaid-Anwendung als auch darüber hinausgehend, vorgesehen sein, dass über das TK- oder VoIP-Endgerät Transaktionsdaten eingegeben werden und durch Freigabe des Zugriffs deren Benutzung zur Auslösung eines Zahlungsvorganges gesteuert wird. Dies ist für den Nutzer zwar im einzelnen Anwendungsfall bedienaufwendiger, kann aber die Akzeptanz des Verfahrens bei Nutzern erhöhen, welche besonders sensibel gegenüber einer Speicherung wichtiger persönlicher Daten (wie Finanz-Transaktionsdaten) in Datenbanken sind.

Eine weitere wichtige Anwendung ist gegeben, wenn der Zugriff einen E-Mail-Account oder ein personalisiertes Internetportal betrifft. Schließlich kann vorgesehen sein, dass der Zugriff einen geschützten Datenbasis-Speicherbereich betrifft, in dem persönliche Dokumente des Nutzers gespeichert sind. Diese letztgenannten Anwendungsfälle betreffen also den Zugriff auf geschützte persönliche Daten eines Nutzers. Schließlich kann, wie weiter oben bereits angemerkt, mit dem vorgeschlagenen Verfahren auch eine Authentifizierung für den berechtigten Zugriff auf nicht frei verfügbare Leistungen eines Leistungsanbieters erfolgen.

Sofern aufgrund einer besonderen Störempfindlichkeit eines Übertragungskanals eine Störbefreiung des in der Stimmanalyse zu verarbeitenden Sprachmaterials als geboten erscheint, kann eingangsseitig der Stimmanalyseeinrichtung eine kanal-angepasste digitale Sprachproben-Vorverarbeitung zur Eliminierung von im Übertragungskanal zwischen dem Telekommunikations- bzw. VoIP-Endgerät und einer Sprachproben-Eingabeschnittstelle aufgeprägten Stimmprofil-Störungen ausgeführt werden. Insbesondere können bei der Sprachproben-Vorverarbeitung Filterparameter benutzt werden, die vorab aus Kanalparametern, insbesondere Codec-Parametern, des durch das Telekommunikations- bzw. VoIP-Endgerät genutzten Netzstandards ermittelt wurden. Eine derartige Sprachproben-Vorverarbeitung muss - sofern sie überhaupt vorgesehen ist - jedenfalls derart gestaltet sein, dass keine für die Stimmanalyse wesentlichen Merkmale der Sprachprobe verloren gehen und die Frequenz- und Amplitudencharakteristik und speziell Impulsmerkmale erhalten bleiben.

Im Interesse einer hohen Nutzerakzeptanz und auch zur Vermeidung organisatorischer Probleme beim Anbieter eines entsprechenden Dienstes wird das vorgeschlagene Verfahren, wie oben bereits angemerkt, bevorzugt mit einer Ersatz-Authentifizierungsprozedur verknüpft. Hierfür ist insbesondere die Eingabe einer PIN oder eines Code- bzw. Passwortes oder dergleichen und der Vergleich mit einer vorgespeicherten PIN oder einem Codewort etc. vorgesehen. Dieses Vorgehen folgt der Überlegung, dass es speziell bei Vorgängen mit nicht allzu hohen Sicherheitsanforderungen vorrangig ist, mit dem automatisierten Verfahren dem Nutzer bei seinem Zugriffsversuch auch tatsächlich einen Zugriff zu ermöglichen. Das ist speziell so gedacht, dass bei einem erstmaligen Zugriffsversuch ein freigebendes Steuersignal in vereinfachter Weise im Ansprechen auf die Eingabe der PIN oder des Passwortes etc. sowie das Einsprechen einer ersten Sprachprobe generiert wird.

Um für spätere Zugriffsversuche, nach einem Erst-Zugriff, aber allein auf die Leistungsfähigkeit der Stimmprofil-Authentifizierung vertrauen zu können, wird die erste Sprachprobe für eine Registrierung (ein sogenanntes Enrollment) genutzt. Das Verfahren kann dann auch so ausgestaltet sein, dass der Nutzer wiederholt zur Abgabe einer Sprachprobe aufgefordert wird, bis aus einer oder mehreren der eingesprochenen Sprachproben tatsächlich ein Stimmprofil bestimmt und abgespeichert werden konnte, und ihm erst dann der Zugriff gewährt wird. Diese Variante mag zwar anfangs zu Irritationen beim Nutzer führen, sofern die Berechnung des Stimmprofils mit seiner ersten Sprachprobe nicht sofort gelingt, sie sichert aber die Verfügbarkeit eines initialen Stimmprofils für nachfolgende Authentifizierungsvorgänge.

Im Rahmen des vorgeschlagenen Verfahrens ist es zunächst möglich, vom Nutzer selbst ausgewählte Sprachproben für die Stimmanalyse zu nutzen, etwa den von ihm eingesprochenen eigenen Namen oder ein Passwort o.ä. Eine höhere Wahrscheinlichkeit der Brauchbarkeit der Sprachprobe für die Stimmprofilberechnung wird allerdings erzielt, wenn man dem Nutzer unter phonematischen Gesichtspunkten bewertete und bewährte Sprachproben vorgibt. Dann wird im Rahmen einer Benutzerführung dem Nutzer die oder jede einzusprechende Sprachprobe angezeigt bzw. vorgesprochen und er optional zur Eingabe einer PIN oder eines Codewortes oder dergleichen aufgefordert.

Ausgestaltungen der erfindungsgemäßen Anordnung ergeben sich weitgehend aus den oben erläuterten Verfahrensaspekten und bedürfen daher hier keiner.genaueren Erläuterung. Hingewiesen wird aber darauf, dass das Kernstück einer entsprechenden Anordnung typischerweise ein System-Server ist, der funktional mit externen Datenbanken und ggf. einem Datenverwaltungs-Server derselben zusammenwirkt. Insbesondere ist dann vorgesehen, dass der System-Server während und/oder unmittelbar nach Abschluss der Authentifizierungsprozedur mit einem Steuereingang eines Datenverwaltungs-Servers, auf dem geschützte Daten oder Dokumente abgelegt sind, oder mit einem Steuereingang eines Dienst-Servers, über den einen definierten Nutzerkreis vorbehaltene Leistungen zugreifbar oder erzeugbar sind, in geschützter Verbindung steht. Wesentliche Komponenten des System-Servers sind eine Sprachproben-Eingabeschnittstelle, eine Stimmanalyseeinrichtung, eine Stimmprofil-Speichereinheit und eine mit beiden verbundene Stimmprofil-Vergleichereinheit.

In einer bevorzugten Ausführung, die die Realisierung der oben erwähnten Ersatz-Authentifizierungsprozedur ermöglicht, umfasst der System-Server zudem eine Kennwort-Eingabeschnittstelle zum Empfang einer durch den Nutzer an seinem Endgerät eingegebenen PIN oder eines Code- bzw. Passwortes oder dergleichen, eine Kennwort-Speichereinheit zur Speicherung einer registrierten PIN oder eines Codewortes etc. und eine Kennwort-Vergleichereinheit zum Vergleich einer aktuell eingegebenen mit einer registrierten PIN oder eines aktuell eingegebenen Codewortes mit einem registrierten Codewort etc. und zur Ausgabe des freigebenden oder eines sperrenden Steuersignals in Abhängigkeit vom Vergleichsergebnis aufweist. Die Benutzerführungs-Einrichtung zur Realisierung einer optischen und/oder akustischen Benutzerführung ist hier insbesondere derart ausgestaltet, dass vom Nutzer Sprachproben angefordert und er zur Eingabe einer PIN, eines Codewortes etc. an seinem Endgerät aufgefordert werden kann.

In einer Ausführung des Systems, die für die aktuelle Eingabe relevanter Daten durch den Nutzer offen ist, hat der System-Server eine Dateneingabeschnittstelle zum Empfang von durch den Nutzer an seinem Endgerät eingegebenen Daten, eine mit der Dateneingabeschnittstelle verbundene Daten-Speichereinheit zur mindestens zeitweiligen Speicherung der empfangenen Daten und eine mit der Stimmprofil-Vergleichereinheit steuersignalmäßig verbundene Datenweiterleitungs-Steuereinheit zur Weiterleitung gespeicherter Daten in Reaktion auf die Ausgabe des ersten Steuersignals durch die Stimmprofil-Vergleichereinheit.

Vorteile und Zweckmäßigkeiten der Erfindung ergeben sich im übrigen aus der nachfolgenden Beschreibung eines Ausführungsbeispiels anhand der Figuren. Von diesen zeigen:
- Fig. 1: eine schematische Darstellung eines ersten Beispiels der erfindungsgemäßen Anordnung in Art eines Funktions-Blockschaltbildes,
- Fig. 2A bis 2E: eine Darstellung des Ablaufs des erfindungsgemäßen Verfahrens in einem Beispiel, in Art eines Flussdiagramms (Callflow) und
- Fig. 3: eine schematische Darstellung eines zweiten Beispiels der erfindungsgemäßen Anordnung in Art eines Funktions-Blockschaltbildes.

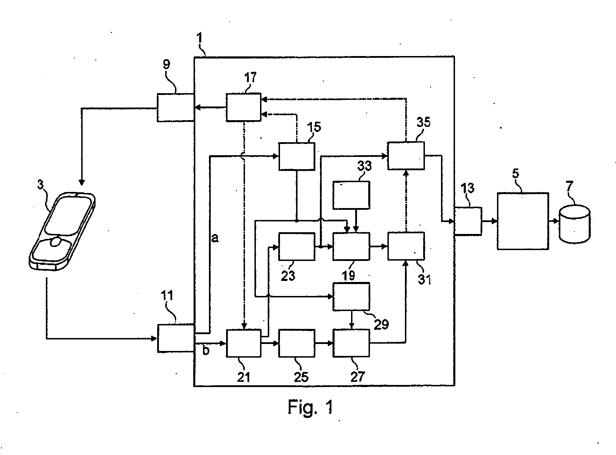

Fig. 1 zeigt schematisch den Aufbau eines Ausführungsbeispiels der erfindungsgemäßen Anordnung, mit einem System-Server 1 (der im gegebenen Zusammenhang im Hinblick auf seine Hauptfunktion auch als Authentifizierungs-Server bezeichnet werden kann) als Bindeglied zwischen einem Mobilfunk-Endgerät 3 eines Nutzers und einem Datenverwaltungs-Server 5 einer Datenbasis 7. Der Datenverwaltungs-Server 5 wird nachfolgend nicht näher spezifiziert; er steht hier allgemein für jede Art von Funktionalität, mit der dem Nutzer des Mobiltelefons der Zugriff auf systemintern verwaltete Daten oder Leistungen, auch in Verbindung mit finanziellen Transaktionen, ermöglicht werden kann. Hinsichtlich der dargestellten Signalverbindungen basiert die Darstellung auf der Annahme, dass sich der System-Server im Zustand eines Authentifizierungs-Vorganges befindet.

Der System-Server 1 hat eine Benutzerführungs-Ausgabeschnittstelle 9, eine Benutzereingaben-Schnittstelle 11 (die zugleich als Sprachproben-Eingabeschnittstelle wirkt) zur temporären Verbindung mit dem Mobiltelefon 3 des Nutzers sowie eine Steuersignal-Ausgabeschnittstelle 13 zur Verbindung mit dem Datenverwaltungs-Server 5, zur Ausgabe von Steuersignalen an diesen.

Gemäß dem (in der Figur im Interesse besserer Übersichtlichkeit vereinfacht dargestellten) funktionalen Aufbau des System-Servers 1 ist die Benutzereingaben-Schnittstelle 11 zugleich als Eingangssignal-Verzweigung ausgestaltet, die eine Zuführung von durch das Mobiltelefon 3 selbsttätig übermittelten Eingangssignalen (etwa der MSISDN) an nachgeordnete Verarbeitungseinheiten über einen ersten Signalweg a und von Spracheingaben des Nutzers an nachgeordnete Komponenten über einen zweiten Signalweg b erlaubt. Der Signalweg a führt zu einer Mobilnummer-Erkennungseinheit 15, die in Reaktion auf die Erfassung der Mobilfunk-Rufnummer des Nutzers ein Steuersignal an eine Benutzerführungseinheit 17 ausgibt. Diese realisiert die gesamte Benutzerführung bei mit dem dargestellten System ausgeführten Enrollment- oder Authentifizierungs-Abläufen und gibt entsprechende Elemente einer Benutzerführung jeweils über die Benutzerführungs-Ausgabeschnittstelle 9 aus. Die erfasste MSISDN wird durch die Mobilnummer-Erkennungseinheit 15 zudem an eine Nutzerdaten-Verarbeitungsstufe 19 geliefert, die insgesamt für die eingangsseitige Verarbeitung von Nutzerdaten aller Art ausgebildet ist. Sie wird dort für eine spätere Verarbeitung zunächst nur zwischengespeichert.

Ein im Ansprechen an den Empfang der MSISDN und parallel zur Ausgabe einer das weitere Verfahren leitenden Benutzerführung durch die Benutzerführungseinheit 17 ausgegebenes internes Steuersignal gelangt zu einer Spracheingaben-Schalteinheit 21, die eine interne Verarbeitung von seitens des Nutzers an seinem Mobiltelefon 3 vorgenommenen und über die Benutzereingaben-Schnittstelle 11 in den Signalweg b eingesteuerten Spracheingaben im System-Server 1 erlaubt.

Auch die Spracheingaben-Schalteinheit 21 bildet einen Signalverzweigungspunkt, von dem aus eine empfangene Spracheingabe einerseits zu einer Spracherkennungseinheit 23 zur Auswertung des Inhaltes der Spracheingabe und andererseits zu einer Stimmprofil-Berechnungseinheit 25 gelangt. Je nach konkretem Steuerzustand der Spracheingaben-Schafteinheit 21 ist hierbei eine alternative oder parallele Weiterleitung einer empfangenen Sprachprobe zur alternativen oder parallelen inhaltlichen Auswertung bzw. Stimmanalyse möglich.

Ein durch die Stimmprofil-Berechnungseinheit 25 erfolgreich errechnetes Stimmprofil wird einer Stimmprofil-Vergleichereinheit 27 zugeführt, wo es einem Vergleich mit einem früher abgespeicherten Stimmprofil des gleichen Nutzers, das hierfür aus einer Stimmprofil-Speichereinheit 29 geladen wird, unterzogen wird. Eine entsprechende Adressierung der Stimmprofil-Speichereinheit 29 wird über das Ausgangssignal der Mobilnummer-Erkennungseinheit 15 bewirkt, welches den refevanten Ansatzpunkt für die Identität des Nutzers liefert. Ergibt sich beim Vergleich der Stimmprofile in der Vergleichereinheit 27 mit hinreichender Verlässlichkeit Übereinstimmung, so gibt diese ein entsprechendes Bestätigungssignal an einen ersten Eingang einer ODER-Stufe 31 aus.

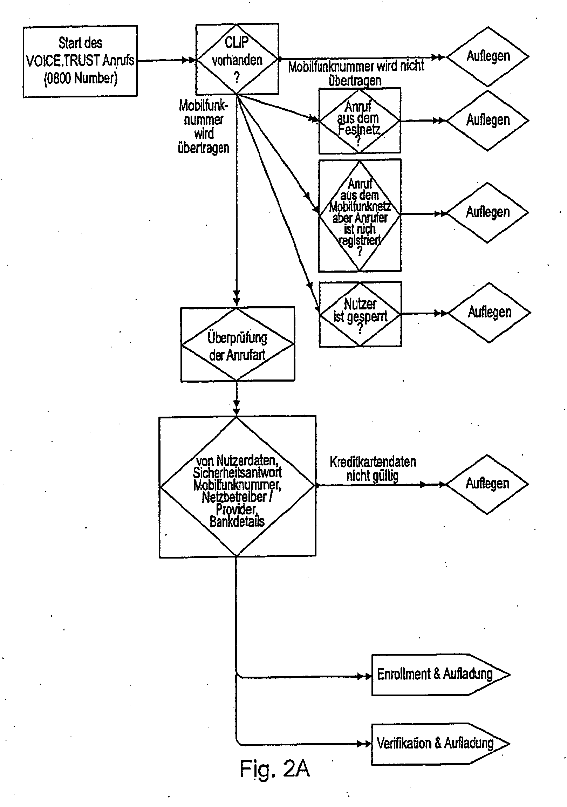

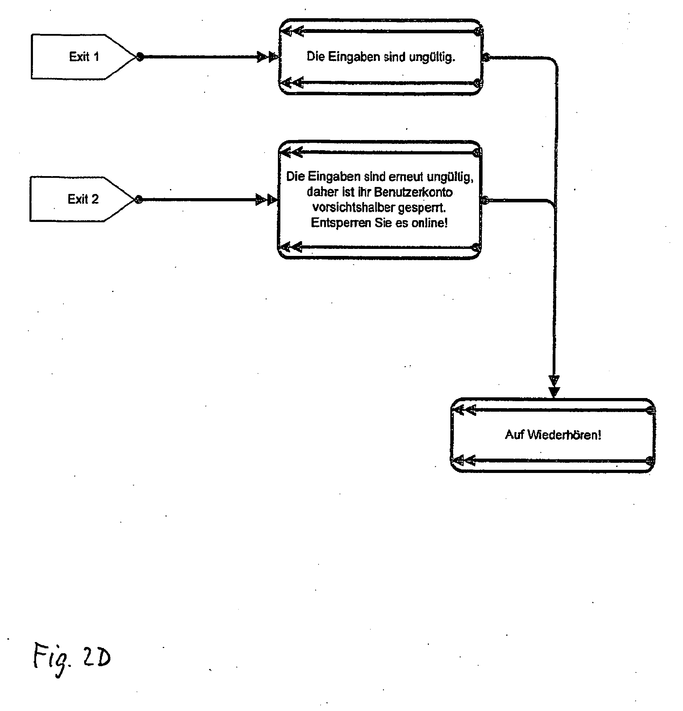

Die Spracherkennungseinheit 23 gewinnt aus der gleichen oder einer anderen Sprachprobe eine relevante Nutzerinformation (siehe dazu weiter unten, unter Bezugnahme auf die Figuren 2A bis 2E) und führt diese der Nutzerdaten-Verarbeitungsstufe 19 zu. Jene ist zu einer vergleichenden Verarbeitung von über diesen Weg oder direkt aus der Mobilnummer-Erkennungseinheit 15 empfangenen Nutzerdaten mit den in einer Nutzerdaten-Speichereinheit 33 gespeicherten Vergleichsdaten ausgebildet und kann (neben anderen Funktionen, die bei der hier vereinfacht dargestellten Funktionalität fortgelassen sind) im Ergebnis des Vergleiches ein Bestätigungssignal an einen zweiten Eingang der ODER-Stufe 31 ausgeben.

Desweiteren können durch Spracherkennung in der Spracherkennungseinheit 23 verarbeitete Nutzereingaben (etwa eine in Klartext eingesprochene gewünschte Zugriffsadresse eines Speicherbereiches, die Bezeichnung einer vom Nutzer abgerufenen Leistung oder ein Aufladungsbetrag einer Prepaid-Karte) zum Eingang einer Nutzereingaben-Durchschaltstufe 35 gelangen. Die Nutzereingaben-Durchschaltstufe 35 ist über einen Steuereingang mit dem Ausgang der ODER-Stufe 31 verbunden und wird über diese in einen Nutzereingaben-Durchschaltzustand versetzt, sofern an mindestens einem von deren Eingängen ein positives Bestätigungssignal anliegt, welches die erfolgreiche Authentifizierung des Nutzers über sein Stimmprofil oder über sonstige Eingaben (also in einer Ersatz-Authentifizierungsprozedur) kennzeichnet. In diesem Falle gelangt die eingangsseitig anliegende Nutzereingabe in die Steuersignal-Ausgabeschnittstelle 13 und führt letztlich zur Zugriffs-Freischaltung in der Datenbasis 7 über den Datenverwaltungs-Server 5 (bzw. zur Ausführung eines vergleichbaren Vorganges, wie etwa der Bereitstellung einer gewünschten Leistung oder der Ausführung einer gewünschten finanziellen Transaktion aufgrund von in der Datenbasis 7 gespeicherten Transaktionsdaten.

Zugleich wird ein die Durchschaltung der Nutzereingaben signalisierendes Steuersignal an die Benutzerführungseinheit 17 gesandt und von dieser eine entsprechende Bestätigungsinformation zur Anzeige/Ausgabe am Mobiltelefon 3 ausgegeben.

Einzelheiten der speziellen Abläufe für konkrete Anwendungs-Szenarien lassen sich für den Fachmann ohne weiteres aus der obigen Beschreibung ableiten, so dass eine Erläuterung eines einzelnen Beispiels ausreicht, wie sie nachfolgend gegeben wird. Aus dieser nachfolgenden Beschreibung ergibt sich auch, dass die in Fig. 1 vereinfacht als parallele Verarbeitung dargestellte Stimmprofil-Berechnung und Spracherkennung zum Zwecke einer Ersatz-Authentifizierung konditional in der Weise verknüpft sein kann, dass die Gewinnung eines Bestätigungssignals für den Nutzer-Zugriff auf die Datenbasis zunächst auf Basis seines Stimmprofils versucht und erst bei Fehlschlagen dieses Authentifizierungs-Versuches eine Ersatz-Prozedur gestartet wird. Die Signalverknüpfungen zwischen den einzelnen Verarbeitungseinheiten, der Nutzereingaben-Durchschaltstufe und der Benutzerführungseinheit sind bei einer solchen Ausführung natürlich entsprechend komplexer und zeitabhängig.

In den Figuren 2A bis 2E ist der Verfahrensablauf bzw. Callflow bei einem Anwendungsfall des erfindungsgemäßen Verfahrens dargestellt, und zwar bei der Authentifizierung eines Anrufers im Kontext der Aufladung einer Mobilfunk-Prepaid-Karte per Anruf beim Provider. Das Flussdiagramm ist im wesentlichen selbsterklärend, so dass eine zusätzliche detaillierte Beschreibung hier verzichtbar ist. Nachfolgend wird daher lediglich auf einige grundsätzliche Aspekte dieses Verfahrens sowie aus dem Flussdiagramm nicht ohne weiteres ersichtliche Zusammenhänge/Abläufe hingewiesen.

Zu dem in Fig. 2A gezeigten Teil ist zunächst anzumerken, dass der beispielhafte Verfahrensablauf darauf aufbaut, dass beim Provider ein Nutzerdatensatz gespeichert vorliegt, der u.a. Transaktionsdaten eines Kreditkartenkontos des Nutzers sowie eine sogenannte "Sicherheitsantwort" (ein Code- bzw. Passwort) umfasst. Weiter ist anzumerken, dass der Vorgang "Auflegen" verkürzt für eine Beendigung der Verbindung seitens des angerufenen Providers steht, die in der Praxis sicherlich mit einem geeigneten Hinweis für den anrufenden Nutzer verbunden sein wird.

Dieser Hinweis kann sinnvollerweise eine Bezugnahme auf den Grund des Verbindungsabbruchs beinhalten.

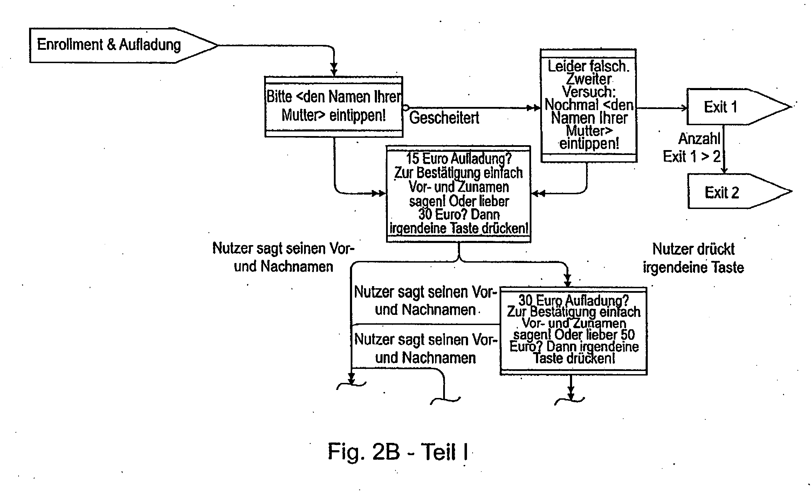

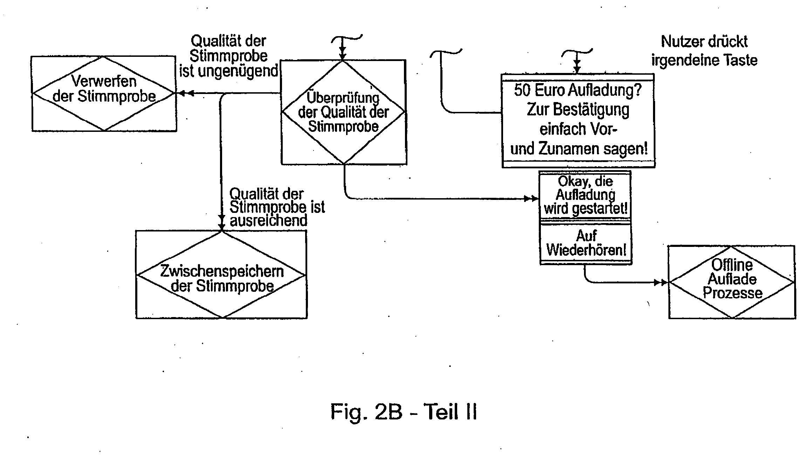

In den Figuren 2B bis 2D sind einige Ausgaben einer Benutzerführung dargestellt, die selbstverständlich bei einer abweichenden Verfahrensführung (etwa ohne die Option, verschiedene Auflade-Beträge zu wählen) verändert sind oder ggf. entfallen.

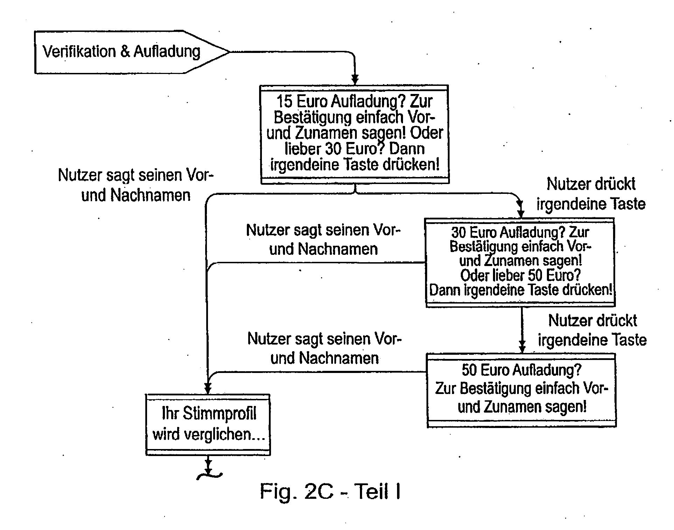

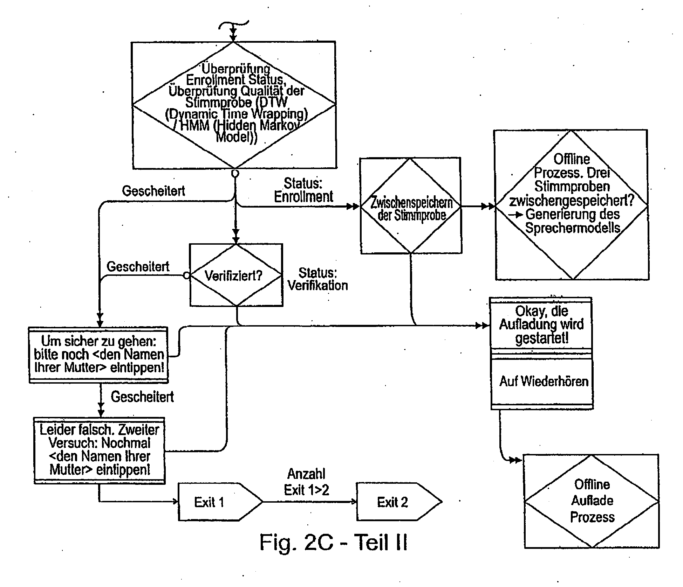

Die Figuren 2B und 2C stellen zwei Varianten eines Gesprächsablaufes, wobei in der ersten Variante (Fig. 2B) noch kein gespeichertes Stimmprofil des Nutzers vorliegt und eine Registrierung (Enrollment) beabsichtigt ist, während in der zweiten Variante (Fig. 2C) eine Verifizierung (Authentifizierung) anhand eines bereits früher gespeicherten Stimmprofils beabsichtigt ist. Wie aus dem Diagramm der Fig. 2C im einzelnen ersichtlich wird, sind aber auch hier Schritte für den Fall vorgesehen, dass ein früherer Enrollment-Versuch nicht erfolgreich war. Im Vergleich beider Gesprächsvarianten wird auch deutlich, dass die zusätzliche Verwendung eines Passwortes (hier: Name der Mutter) im Sinne einer Ersatz-Authentifizierung in verschiedenen Phasen vorgesehen ist.

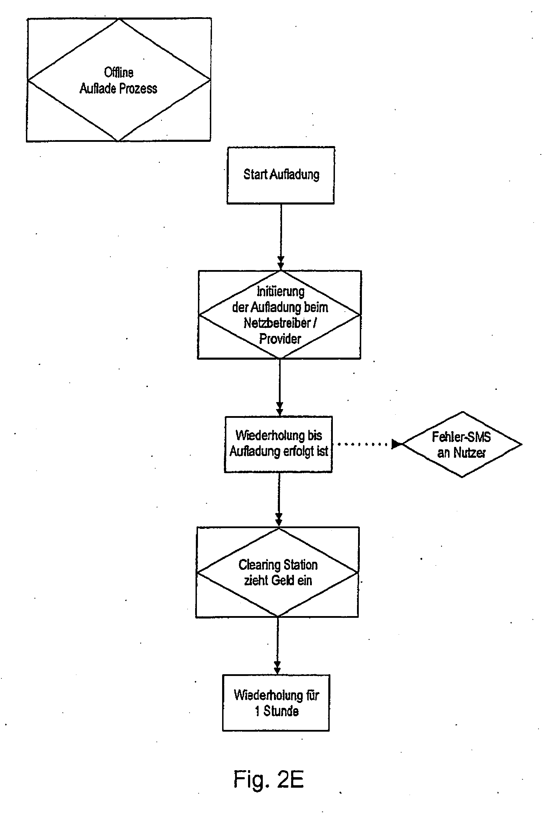

Die skizzenartige Darstellung des Offline-Aufladeprozesses in Fig. 2E ist als ergänzende Darstellung zu verstehen, denn sie ist unabhängig vom Authentifizierungsverfahren.

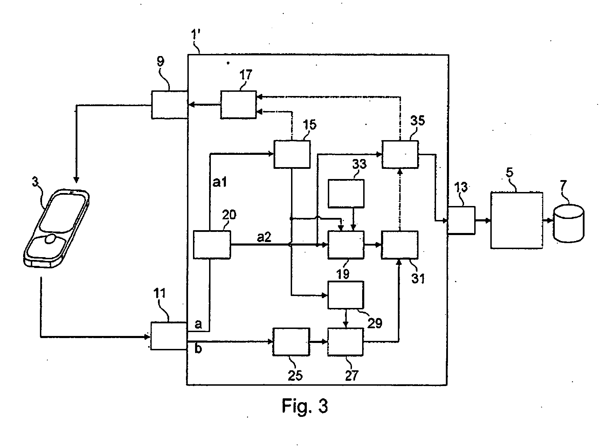

In Fig. 3 ist eine Abwandlung der Anordnung nach Fig. 1 dargestellt, die sich von jener durch eine andere Art der Eingaben und der Signalverarbeitung im Rahmen der Ersatz-Authentifizierungsprozedur unterscheidet. Weitestgehend stimmt der Aufbau der Anordnung 1' nach Fig. 3 jedoch mit demjenigen der Anordnung 1 aus Fig. 1 überein; die übereinstimmenden Komponenten sind mit den gleichen Bezugsziffern bezeichnet und werden hier nicht nochmals erläutert.

Der wesentliche Unterschied besteht darin, dass Spracheingaben hier ausschließlich zur stimmprofil-basierten Authentifizierung des Nutzers verwendet werden und daher (auf dem Signalweg b) direkt der Stimmprofil-Berechnungseinheit 25 zugeführt werden können. Auf dem Signalweg a gelangen sowohl vom Mobiltelefon 3 automatisch generierte Datensätze (wie die MSISDN) als auch Datensätze aus vom Nutzer mittels der Telefontastatur vorgenommenen Eingaben (etwa einer PIN oder eines Passwortes etc.) zu einer Digitaleingaben-Klassifizierungsstufe 20. Diese leitet selbsttätig im Telefon generierte Datensätze auf einem ersten Teil-Signalweg a1 zur Mobilnummern-Erkennungsstufe 15 weiter, während vom Nutzer digital eingegebene Daten über einen zweiten Teil-Signalweg a2 direkt zur Nutzerdaten-Verarbeitungsstufe 19 und parallel zur Nutzereingaben-Durchschaltstufe 35 geleitet werden. Die in diesen Komponenten stattfindende Verarbeitung entspricht wieder derjenigen bei der ersten Ausführungsform.

Die Ausführung der Erfindung ist nicht auf die oben dargestellte und beschriebene beispielhafte Vorrichtung und das vorstehend beschriebene beispielhafte Verfahren beschränkt, sondern ebenso in einer Vielzahl von Abwandlungen möglich, die im Rahmen fachgemäßen Handelns liegen. Auf wesentliche andere Anwendungen sowie Abwandlungen ist im allgemeinen Beschreibungsteil hingewiesen.

## Patentansprüche

1. Digitales Verfahren zur Authentifizierung eines Nutzers eines Telekommunikations- bzw. Datennetzes für einen Zugriff zu geschützten Daten oder einer einem definierten Nutzerkreis vorbehaltenen Leistung oder für die Verwendung aktuell durch den Nutzer eingegebener Daten, wobei eine aktuell bei einem Zugriffs-Versuch durch den Nutzer an einem Telekommunikations- oder VoIP-Endgerät eingesprochene Sprachprobe einer Stimmanalyseeinrichtung zugeführt und hierin ein aktuelles Stimmprofil errechnet und dieses in einer Stimmprofil-Vergleichereinheit mit einem vorgespeicherten initialen Stimmprofil verglichen und im Ansprechen auf ein positives Vergleichsergebnis der Nutzer authentifiziert und ein den Zugriff freigebendes erstes Steuersignal, jedoch im Ansprechen auf ein negatives Vergleichsergebnis ein eine Ersatz-Authentifizierungsprozedur triggerndes zweites Steuersignal erzeugt wird, wobei von einer Spracheingaben-Schalteinheit (21) eine empfangene Spracheingabe einerseits zu einer Spracherkennungseinheit (23) zur Auswertung des Inhaltes der Spracheingabe und andererseits zu einer Stimmprofil-Berechnungseinheit (25) gelangt
**dadurch gekennzeichnet, dass**
die Berechnung des Stimmprofils konditional mit der Spracherkennung für das Auslösen der Ersatz-Authentifizierung so verknüpft ist, dass das Gewinnen des ersten Steuersignals zunächst auf der Basis des Stimmprofils versucht und erst bei einem Fehlschlagen dieses Authentifizierungs-Versuches wegen einer unzureichenden Qualität oder bei einer nicht ausreichenden Verlässlichkeit der Stimmprofil-Auswertung die Ersatz-Authentifizierungsprozedur gestartet wird, wobei
die Ersatz-Authentifizierungsprozedur die Eingabe einer PIN oder eines Codewortes mittels einer Telefontastatur und den Vergleich mit einer vorgespeicherten PIN oder einem Codewort umfasst, wobei im Ansprechen auf ein positives Vergleichsergebnis das erste Steuersignal erzeugt wird,
und bei einem erstmaligen Zugriffsversuch das erste Steuersignal in vereinfachter Weise im Ansprechen auf die Eingabe der PIN oder des Codewortes und des positiven Ergebnisses des Vergleichs mit einer vorgespeicherten PIN oder einem Codewort sowie
das Einsprechen einer ersten Sprachprobe oder auf die Abspeicherung des aus einer ersten eingesprochenen Sprachprobe errechneten initialen Stimmprofils generiert wird.

2. Verfahren nach Anspruch 1,
**dadurchgekennzeichnet, dass**
als Telekommunikations-Endgerät ein Prepaid-Mobilfunkendgerät genutzt wird und der Zugriff gespeicherte Transaktionsdaten für einen Bezahlvorgang zur Auffüllung eines Prepaid-Guthabens betrifft.

3. Verfahren nach Anspruch 2,
**dadurch gekennzeichnet, dass**
durch Freigabe des Zugriffs zugleich ein Zahlungsvorgang aufgrund der gespeicherten Transaktionsdaten ausgelöst wird.

4. Verfahren nach Anspruch 1,
**dadurch gekennzeichnet, dass**
über das Telekommunikations- oder VoIP-Endgerät Transaktionsdaten eingegeben werden und durch Freigabe des Zugriffs deren Benutzung zur Auslösung eines Zahlungsvorganges gesteuert wird.

5. Verfahren nach einem der vorangehenden Ansprüche,
**dadurch gekennzeichnet, dass**
der Zugriff transaktionsrelevante Daten eines Bank- oder Kreditkartenkontos oder sonstigen Guthabens betrifft.

6. Verfahren nach einem der Ansprüche 1 bis 4,
**dadurch gekennzeichnet, dass**
der Zugriff einen E-Mail-Account oder ein personalisiertes Internetportal betrifft.

7. Verfahren nach einem der Ansprüche 1 bis 4,
**dadurch gekennzeichnet, dass**
der Zugriff einen geschützten Datenbasis-Speicherbereich betrifft, in dem persönliche Dokumente des Nutzers gespeichert sind.

8. Verfahren nach einem der vorangehenden Ansprüche,
**dadurch gekennzeichnet, dass**
die Authentifizierungs-Verarbeitung auf einem Authentifizierungs-Server erfolgt, der über eine geschützte Steuersignalverbindung das erste oder zweite Steuersignal zu einem getrennten Datenverwaltungs-Server sendet.

9. Verfahren nach einem der vorangehenden Ansprüche,
**dadurch gekennzeichnet, dass**
eingangsseitig der Stimmanalyseeinrichtung eine kanal-angepasste digitale Sprachproben-Vorverarbeitung zur Eliminierung von im Übertragungskanal zwischen dem Telekommunikations- bzw. VoIP-Endgerät und einer Sprach-proben-Eingabeschnittstelle aufgeprägten Stimmprofil-Störungen ausgeführt wird.

10. Verfahren nach Anspruch 9,
**dadurch gekennzeichnet, dass**
bei der Sprachproben-Vorverarbeitung Filterparameter benutzt werden, die vorab aus Kanalparametern, insbesondere Codec-Parametern, des durch das Telekommunikations- bzw. VoIP-Endgerät genutzten Netzstandards ermittelt wurden.

11. Verfahren nach einem der vorangehenden Ansprüche,
**dadurch gekennzeichnet, dass**
im Rahmen einer Benutzerführung dem Nutzer die oder jede einzusprechende Sprachprobe angezeigt und er optional zur Eingabe einer PIN oder eines Codewortes oder dergleichen aufgefordert wird.

12. Verfahren nach einem der vorangehenden Ansprüche,
**gekennzeichnet durch**
die automatisierte Ausführung in Quasi-Echtzeit.

13. Anordnung zur Durchführung des Verfahrens nach einem der vorangehenden Ansprüche, mit einem System-Server zur Durchführung der Authentifizierungsprozedur, wobei dem System-Server eine Sprachproben-Eingabeschnittstelle zum Empfang von Sprachproben zugeordnet ist und er eine hiermit verbundene Stimmanalyseeinrichtung, eine Stimmprofil-Speichereinheit und eine mit der Stimmanalyseeinrichtung und der Stimmprofil-Speichereinheit verbundene Stimmprofil-Vergleichereinheit zum Vergleich eines vorgespeicherten initialen Stimmprofils mit einem aktuell ermittelten Stimmprofil und zur Ausgabe des ersten oder zweiten Steuersignals in Abhängigkeit vom Vergleichsergebnis aufweist, wobei
der System-Server eine Kennwort-Eingabeschnittstelle zum Empfang einer durch den Nutzer an seinem Endgerät eingegebenen PIN oder eines Codewortes, eine Kennwort-Speichereinheit zur Speicherung einer registrierten PIN oder eines Codewortes und eine Kennwort-Vergleichereinheit zum Vergleich einer aktuell eingegebenen mit einer registrierten PIN oder eines aktuell eingegebenen Codewortes mit einem registrierten Codewort und zur Ausgabe des ersten oder zweiten Steuersignals in Abhängigkeit vom Vergleichsergebnis aufweist,
**dadurch gekennzeichnet, dass**
eine Spracheingaben-Schalteinheit (21) zum alternativen Weiterleiten einer empfangenen Spracheingabe zu einer Spracherkennungseinheit (23) oder zu einer Stimmprofil-Berechnungseinheit (25) vorgesehen ist, wobei
ein Mittel für eine konditionale Verknüpfung einer Berechnung des Stimmprofils mit einer Spracherkennung für ein Auslösen einer Ersatz-Authentifizierung vorgesehen ist, das versuchsweise ein Gewinnen des ersten Steuersignals auf der Basis des Stimmprofils ausführt und bei einem Fehlschlagen des Authentifizierungs-Versuches über das Stimmprofil die Ersatz-Authentifizierungsprozedur zur Eingabe einer mittels einer Telefontastatur eingegebenen PIN oder eines Passwortes, startet und
eine Betriebssteuerung vorgesehen ist, durch die bei einem erstmaligen Zugriffsversuch das erste Steuersignal in vereinfachter Weise im Ansprechen auf die Eingabe der PIN oder des Codewortes und des positiven Ergebnisses des Vergleichs mit einer vorgespeicherten PIN oder einem Codewort sowie das Einsprechen einer ersten Sprachprobe oder auf die Abspeicherung des aus einer ersten eingesprochenen Sprachprobe errechneten initialen Stimmprofils generiert wird.

14. Anordnung nach Anspruch 13,
**dadurch gekennzeichnet, dass**
der System-Server eine Benutzerführungs-Einrichtung zur Realisierung einer optischen und/oder akustischen Benutzerführung, insbesondere zur Anforderung einer Sprachprobe oder einer Aufforderung zur Eingabe einer PIN oder eines Codewortes etc., am Endgerät des Nutzers aufweist.

15. Anordnung nach Anspruch 13 oder 14,
**dadurch gekennzeichnet, dass**
die Sprachproben-Eingabeschnittstelle des System-Servers einen Telefon- oder VoIP-Anschluss aufweist und während der Authentifizierungsprozedur eine Verbindung zu einem Telekommunikations- bzw. VoIP-Endgerät eines zu authentifizierenden Nutzers besteht.

16. Anordnung nach einem der Ansprüche 13 bis 15,
**dadurch gekennzeichnet, dass**
der System-Server während und/oder unmittelbar nach Abschluss der Authentifizierungsprozedur mit einem Steuereingang eines Datenverwaltungs-Servers, auf dem geschützte Daten oder Dokumente abgelegt sind, oder mit einem Steuereingang eines Dienst-Servers, über den einen definierten Nutzerkreis vorbehaltene Leistungen zugreifbar oder erzeugbar sind, in geschützter Verbindung steht.

17. Anordnung nach einem der Ansprüche 13 bis 16,
**dadurch gekennzeichnet, dass**
der System-Server eine Dateneingabeschnittstelle zum Empfang von durch den Nutzer an seinem Endgerät eingegebenen Daten, eine mit der Dateneingabeschnittstelle verbundene Daten-Speichereinheit zur mindestens zeitweiligen Speicherung der empfangenen Daten und eine mit der Stimmprofil-Vergleichereinheit steuersignalmäßig verbundene Datenweiterleitungs-Steuereinheit zur Weiterleitung gespeicherter Daten in Reaktion auf die Ausgabe des ersten Steuersignals durch die Stimmprofil-Vergleichereinheit aufweist.

## Claims

1. Digital process for authentication of a user of a telecommunications or data network for access to protected data or a service reserved for a defined circle of users or for the use of data currently entered by the user, whereby a voice sample currently enunciated during an access attempt by the user at a telecommunications or VoIP terminal is routed to a voice analysis unit where a current voice profile is computed and compared in a voice profile comparison unit with a previously stored initial voice profile and, in response to a positive comparison result, the user is authenticated and a first control signal enabling access is generated, but in response to a negative comparison result a second control signal triggering a substitute authentication procedure is generated, whereby a received voice input goes from a voice input switching unit (21) to a voice recognition unit (23), on the one hand, for evaluation of the content of the voice input and, on the other hand, to a voice profile computing unit (25)
**characterised in that**
the computation of the voice profile is conditionally combined with the voice recognition for the purpose of triggering the substitute authentication in such a way that acquisition of the first control signal is first attempted on the basis of the voice profile and only if this authentication attempt fails due to unsatisfactory quality or if the voice profile evaluation is not sufficiently reliable is the substitute authentication procedure started, whereby
the substitute authentication procedure involves the entering of a PIN or code word by means of a telephone keypad and its comparison with a previously stored PIN or code word, with the first control signal being generated in response to a positive comparison result,
and during a first access attempt the first control signal is generated in a simplified way in response to the entering of the PIN or code word and the positive result of the comparison with a previously stored PIN or code word and
the enunciation of a first voice sample or in response to the storing of the initial voice profile computed from a first enunciated voice sample.

2. Process according to claim 1,
**characterised in that**
a prepaid mobile communication terminal is used as the telecommunications terminal and access relates to transaction data stored for a payment process to top-up prepaid credit.

3. Process according to claim 2,
**characterised in that**
through the enabling of access a payment transaction is triggered based on the stored transaction data.

4. Process according to claim 1,
**characterised in that**
transaction data is entered via the telecommunications or VoIP terminal and through the enabling of access its use for triggering a payment transaction is controlled.

5. Process according to one of the preceding claims,
**characterised in that**
access relates to transaction-relevant data of a bank or credit card account or other credit balance.

6. Process according to claims 1 to 4,
**characterised in that**
access relates to an e-mail account or a personalised internet portal.

7. Process according to one of claims 1 to 4,
**characterised in that**
access relates to a protected database memory area in which the personal documents of a user are stored.

8. Process according to one of the preceding claims,
**characterised in that**
the authentication processing is carried out on an authentication server that sends the first or second control signal to a separate data management server via a secure control signal connection.

9. Process according to one of the preceding claims,
**characterised in that**
on the input side of the voice analysis device digital voice sample pre-processing adapted for the channel is performed to eliminate distinctive voice profile interference on the transmission channel between the telecommunications or VoIP terminal and a voice sample input interface.

10. Process according to claim 9,
**characterised in that**
filter parameters are used during voice sample pre-processing which were determined in advance from channel parameters, in particular codec parameters, of the network standard used by the telecommunications or VoIP terminal.

11. Process according to one of the preceding claims,
**characterised in that**
within the scope of a user prompt the or every voice sample to be enunciated is indicated to the user and he or she is optionally requested to enter a PIN or code word or similar.

12. Process according to one of the preceding claims,
**characterised by**
near-real-time automated execution.

13. Arrangement for the execution of the process according to one of the preceding claims, with a system server to execute the authentication procedure, wherein a voice sample input interface is assigned to the system server for receipt of voice samples and the system server has a voice analysis unit connected to it, a voice profile storage unit and a voice profile comparison unit connected to the voice analysis unit and the voice profile storage unit for comparison of a previously stored initial voice profile with a currently determined voice profile and for issuing a first or second control signal depending on the comparison result, whereby
the system server has a password input interface for receipt of a PIN or code word entered by the user on his terminal, a password storage unit for storage of a registered PIN or code word and a password comparison unit for comparing a currently entered PIN with a registered PIN or a currently entered code word with a registered code word and for issuing the first or second control signal depending on the comparison result,
**characterised in that**
a voice input switching unit (21) is provided for the alternative forwarding of a received voice input to a voice recognition unit (23) or to a voice profile computation unit (25), whereby
a means is provided for conditionally combining a computation of the voice profile with a voice recognition for the purpose of triggering a substitute authentication and which attempts the acquisition of the first control signal on the basis of the voice profile and if the authentication attempt using the voice profile fails starts the substitute authentication procedure for entering a PIN or password entered by means of a telephone keypad, and an operational control is provided, through which the first control signal is generated in a simplified manner during a first access attempt in response to the entering of the PIN or code word and the positive result of the comparison with a previously stored PIN or code word and the enunciation of a first voice sample or in response to the storing of the initial voice profile computed from a first enunciated voice sample.

14. Arrangement according to claim 13,
**characterised in that**
the system server has a user prompting unit on the user's terminal for carrying out a visual and/or audible user prompt, in particular to request a voice sample or to prompt the user to enter a PIN or code word, etc.

15. Arrangement according to claim 13 or 14,
**characterised in that**
the voice sample input interface of the system server has a telephone or VoIP connection and there is a link during the authentication procedure to a telecommunications or VoIP terminal of a user who is to be authenticated.

16. Arrangement according to one of claims 13 to 15,
**characterised in that**
the system server during and/or immediately following completion of the authentication procedure is connected securely to a control input of a data management server on which protected data or documents are stored, or with a control input of a service server via which services reserved for a defined circle of users can be accessed or generated.

17. Arrangement according to one of claims 13 to 16,
**characterised in that**
the system server has a data input interface for receipt of data entered by the user at his terminal, a data storage unit connected to the data input interface for storage of the received data, at least temporarily, and a data forwarding control unit connected to the voice profile comparison unit in relation to the control signal to forward stored data in response to the issuing of the first control signal by the voice profile comparison unit.

## Revendications

1. Procédé numérique d'authentification d'un utilisateur d'un réseau de télécommunications ou de données en vue d'un accès à des données protégées ou à une prestation réservée à un groupe déterminé d'utilisateurs ou en vue de l'utilisation de données réellement entrées par l'utilisateur, sachant qu'un échantillon vocal réellement énoncé par l'utilisateur dans un terminal de télécommunication ou de transmission de la voix sur Internet (VoIP) lors d'une tentative d'accès est transmis à un dispositif d'analyse vocale et qu'un profil vocal réel y est calculé et que celui-ci est comparé dans une unité de comparaison de profils vocaux avec un profil vocal initial préenregistré et que, en réaction à un résultat positif de la comparaison, l'utilisateur est authentifié et qu'un premier signal de commande débloquant l'accès est produit, mais qu'en réaction à un résultat négatif de la comparaison, un second signal de commande déclenchant une procédure d'authentification de secours est produit, sachant qu'une entrée vocale reçue aboutit, depuis une unité de commutation d'entrées vocales (21), d'une part, à une unité de reconnaissance vocale (23) en vue de l'évaluation du contenu de l'entrée vocale et, d'autre part, à une unité de calcul de profils vocaux (25),
**caractérisé en ce que**
le calcul du profil vocal est lié conditionnellement à la reconnaissance vocale en vue du déclenchement de l'authentification de secours de telle sorte que l'on tente d'abord d'obtenir le premier signal de commande sur la base du profil vocal et que la procédure d'authentification de secours soit seulement lancée en cas d'échec de cette tentative d'authentification en raison d'une qualité insatisfaisante ou en cas d'une fiabilité non suffisante de l'évaluation du profil vocal, sachant que
la procédure d'authentification de secours consiste à saisir un numéro d'identification personnel (PIN) ou un mot de code au moyen d'un clavier de téléphone et à le comparer avec un PIN préenregistré ou un mot de code, le premier signal de commande étant produit en réaction à un résultat positif de la comparaison,
et que, lors d'une première tentative d'accès, le premier signal de commande est produit de façon simplifiée en réaction à la saisie du PIN ou du mot de code et au résultat positif de la comparaison avec un PIN préenregistré ou un mot de code, ainsi que
à l'énoncé d'un premier échantillon vocal ou à l'enregistrement du profil vocal initial calculé à partir d'un premier échantillon vocal énoncé.

2. Procédé selon la revendication 1,
**caractérisé en ce que**
l'on utilise comme terminal de télécommunication un terminal téléphonique mobile prépayé et **en ce que** l'accès concerne des données de transaction enregistrées en vue d'une procédure de paiement destinée à réalimenter un avoir prépayé.

3. Procédé selon la revendication 2,
**caractérisé en ce que**
le déblocage de l'accès déclenche simultanément une procédure de paiement sur la base des données de transaction enregistrées.

4. Procédé selon la revendication 1,
**caractérisé en ce que**
les données de transaction sont saisies au moyen du terminal de télécommunication ou VoIP et **en ce que** le déblocage de l'accès commande leur utilisation en vue du déclenchement d'une procédure de paiement.

5. Procédé selon l'une quelconque des revendications précédentes,
**caractérisé en ce que**
l'accès concerne des données transactionnelles d'un compte bancaire ou de carte de crédit ou d'un autre avoir.

6. Procédé selon l'une quelconque des revendications 1 à 4,
**caractérisé en ce que**
l'accès concerne un compte de messagerie électronique ou un portail Internet personnalisé.

7. Procédé selon l'une quelconque des revendications 1 à 4,
**caractérisé en ce que**
l'accès concerne une zone mémoire de base de données protégées dans laquelle des documents personnels de l'utilisateur sont stockés.

8. Procédé selon l'une quelconque des revendications précédentes,
**caractérisé en ce que**
le traitement de l'authentification a lieu sur un serveur d'authentification qui envoie le premier ou le second signal de commande à un serveur séparé d'administration de données, via une liaison protégée de transmission de signal de commande.

9. Procédé selon l'une quelconque des revendications précédentes,
**caractérisé en ce que**
côté entrée du dispositif d'analyse vocale, un prétraitement numérique des échantillons vocaux, adapté au canal de transmission, est effectué pour éliminer les parasites de profils vocaux survenant dans le canal de transmission entre le terminal de télécommunication ou VoIP et une interface de saisie d'échantillons vocaux.

10. Procédé selon la revendication 9,
**caractérisé en ce que**
lors du prétraitement des échantillons vocaux, on utilise des paramètres de filtrage qui ont été déterminés à l'avance à partir de paramètres de canal, notamment de paramètres de codeur-décodeur (codec), de la norme de réseau utilisée par le terminal de télécommunication ou VoIP.

11. Procédé selon l'une quelconque des revendications précédentes,
**caractérisé en ce que**
dans le cadre d'un accompagnement de l'utilisateur, le ou chaque échantillon vocal à énoncer est présenté à l'utilisateur et il lui est demandé, facultativement, de saisir un PIN ou un mot de code ou analogue.

12. Procédé selon l'une quelconque des revendications précédentes,
**caractérisé par le fait que**
l'exécution automatique s'effectue quasiment en temps réel.

13. Dispositif d'exécution du procédé selon l'une quelconque des revendications précédentes, comprenant un serveur système pour la réalisation de la procédure d'authentification, sachant qu'une interface d'entrée d'échantillons vocaux est affectée au serveur système en vue de la réception d'échantillons vocaux et qu'il comporte un dispositif d'analyse vocale y associé, une unité de stockage de profils vocaux et une unité de comparaison de profils vocaux reliée à l'unité d'analyse vocale et à l'unité de stockage de profils vocaux en vue de la comparaison d'un profil vocal initial préenregistré avec un profil vocal réellement déterminé et de l'émission du premier ou du second signal de commande en fonction du résultat de la comparaison, sachant que
le serveur système comprend une interface d'entrée de mot de passe pour recevoir un PIN saisi par l'utilisateur sur son terminal ou un mot de code, une unité de stockage de mots de passe pour stocker un PIN enregistré ou un mot de code, et une unité de comparaison de mots de passe pour comparer un PIN réellement saisi avec un PIN enregistré ou un mot de code réellement saisi avec un mot de code enregistré et pour émettre le premier ou le second signal de commande en fonction du résultat de la comparaison,
**caractérisé en ce que**
une unité de commutation d'entrées vocales (21) est prévue pour la transmission alternée d'une entrée vocale reçue à une unité de reconnaissance vocale (23) ou à une unité de calcul de profils vocaux (25), sachant que que l'on prévoit, pour lier conditionnellement un calcul du profil vocal à une reconnaissance vocale en vue de déclencher une authentification de secours, un moyen qui exécute à titre d'essai une extraction du premier signal de commande sur la base du profil vocal et qui, en cas d'échec de la tentative d'authentification au moyen du profil vocal, lance la procédure d'authentification de secours en vue de la saisie d'un PIN, saisi au moyen d'un clavier de téléphone, ou d'un mot de passe, et que
l'on prévoit une commande opératoire qui, lors d'une première tentative d'accès, produit le premier signal de commande de façon simplifiée en réaction à la saisie du PIN ou du mot de code et au résultat positif de la comparaison avec un PIN préenregistré ou un mot de code, ainsi qu'à l'énoncé d'un premier échantillon vocal ou à l'enregistrement du profil vocal initial calculé à partir du premier échantillon vocal énoncé.

14. Dispositif selon la revendication 13,
**caractérisé en ce que**
le serveur système comprend un dispositif d'accompagnement de l'utilisateur pour réaliser un accompagnement visuel et/ou sonore de l'utilisateur, notamment pour demander un échantillon vocal ou émettre une invite en vue de la saisie d'un PIN ou d'un mot de code, etc., sur le terminal de l'utilisateur.

15. Dispositif selon la revendication 13 ou 14,
**caractérisé en ce que**
l'interface d'entrée d'échantillons vocaux du serveur système comprend une connexion téléphonique ou VoIP et **en ce qu'**il existe, pendant la procédure d'authentification, une liaison avec un terminal de télécommunication ou VoIP d'un utilisateur à authentifier.

16. Dispositif selon l'une quelconque des revendications 13 à 15,
**caractérisé en ce que**
pendant la procédure d'authentification et/ou directement après sa clôture, le serveur système est relié par une liaison protégée à une entrée de commande d'un serveur d'administration de données dans lequel des données ou documents protégés sont stockés, ou à une entrée de commande d'un serveur de service par le biais duquel des prestations réservées sont accessibles à, ou réalisables par, un groupe déterminé d'utilisateurs.

17. Dispositif selon l'une quelconque des revendications 13 à 16,
**caractérisé en ce que**
le serveur système comprend une interface d'entrée de données pour recevoir des données entrées par l'utilisateur sur son terminal, une unité d'enregistrement de données reliée à l'interface d'entrée de données pour enregistrer au moins temporairement les données reçues, et une unité de transmission de données reliée par signaux de commande à l'unité de comparaison de profils vocaux pour transmettre les données enregistrées en réaction à l'émission du premier signal de commande par l'unité de comparaison de profils vocaux.
